# EUROPEAN PATENT APPLICATION

(11) **EP 0 936 461 A2**
(43) Date of publication of application: **18.08.1999**
(21) Application number: 99301049.5
(22) Date of filing: 11.02.1999
(51) Int. Cl.: G01N 27/12

(54) **Gas sensor**

(30) Priority: 11.02.1998 GB 9802940; 07.07.1998 GB 9814660
(71) Applicant: Cbl Ceramics Limited, Milford Haven, Pembrokeshire SA73 2PP (GB)
(72) Inventor: Watson, Joseph, Swansea, SA2 8BG (GB)
(74) Representative: Austin, Hedley William

(57) **Abstract**

The gas sensor includes a substrate which is an electrical insulator and a thermal conductor, the substrate having thereon:
(i) a heating element for heating the substrate;
(ii) at least one gas-sensitive active material deposited on the substrate; and
(iii) a set of at least two spaced electrodes in contact with the active material.

## Description

The present invention is concerned with sensors for detecting and monitoring gases, vapours or the like.

Many solid-state gas sensors are known in the art; such sensors are produced by deposition of gas sensitive active materials, electrodes and heat arrays on appropriate substrates. The most common substrate known in the art is aluminium oxide; also known as substrates are silicon, silicon dioxide and silicon nitride.

Such solid-state gas sensors are described in K. Ihokura and J. Watson, "The Stannic Oxide Gas Sensor", (CRC Press, 1994).

Prior art sensors are generally associated with electronic circuits which, via contact electrodes, determine changes in the conductance or resistance of the gas-sensitive active material in the presence of gases or vapours.

However, we have established that the most common substrate, aluminium oxide, has the disadvantage that it is a thermal insulator. The heat conduction within the substrate is poor, which causes temperature gradients within the sensor. This in turn results in the sensitivity and selectivity properties of the active material to be undesirably impaired.

It is therefore an aim of the present invention to provide a sensor for gases, vapours or the like which is sensitive and has good selective properties.

According to the present invention there is provided a gas sensor which includes a substrate which is both an electrical insulator and a thermal conductor, the substrate having thereon:
(i) heating means for said substrate;
(ii) at least one gas-sensitive active material deposited on the substrate; and
(iii) a set of at least two spaced electrodes in contact with said active material.

The thermal conductivity of the substrate can help to ensure that the sensor establishes a near-uniform temperature throughout substantially the entire sensor, thus enabling the operating temperature of the active material to be maintained substantially constant throughout its volume.

Typically, each set of conductors is provided with means for monitoring the electrical conductance between the respective conductor. Such monitoring means typically provide an output such as a warning signal or the like, or an output giving a quantitative indication.

Typically, the substrate is of a refractory or ceramic material, which may be in the form of an oxide. A preferred example of such an oxide is beryllium oxide; an alternative material is aluminium nitride. Such materials are advantageously both thermal conductors and electrical insulators. The substrate is typically in the form of a substantially monolithic body.

The active material is typically deposited on one surface of the substrate.

The heating means present on the substrate typically includes one or more heating elements, which may be electrical resistance heating elements. Such elements may be made from a metal such as a noble metal (for example, platinum) or from an electrically conductive compound such as ruthenium dioxide.

According to a first embodiment of the present invention the substrate is typically a substantially monolithic body, which is preferably substantially disc or tablet shaped.

According to a second embodiment of the present invention, such a substantially monolithic body may be in the form of an elongate tile. In this embodiment, a heating element is typically arranged towards one end of the tile, with the other end being devoid of heating elements. This enables a desired thermal gradient to be created along the length of the tile.

Advantageously, different active materials can be deposited along the length of such a tile (each covering a distinct zone). A separate set of contact electrodes is typically provided for each active material, so that the conductance of each zone of active material deposited can be measured separately, or can give rise to a separate detectable output (such as a warning sound or visual indication).

Typically, a cooling element may be provided at a position distal to or spaced from the heating means to provide a controlled temperature gradient along the sensor body.

The invention may be more clearly understood from the following description, given by way of example only, in which reference is made to the accompanying drawings, wherein:
Figure 1a represents a top view of a sensor according to a first aspect of the invention;
Figure 1b represents a bottom view of the sensor of Figure 1;
Figure 2a represents an exemplary heater configuration suitable for use on the obverse of a sensor according to the invention;
Figure 2b represents a thermal image of an upper surface of an aluminium oxide substrate known in the art and utilising the heater configuration shown in Figure 2a;
Figure 2c represents a thermal image of an upper surface of a beryllium oxide substrate according to the present invention and utilising the heater configuration shown in Figure 2a;
Figure 3a represents a top view of a sensor according to a second aspect of the invention;
Figure 3b represents a bottom view of a sensor according to a second aspect of the invention; and
Figure 4 represents a sensor according to a third aspect of the invention.

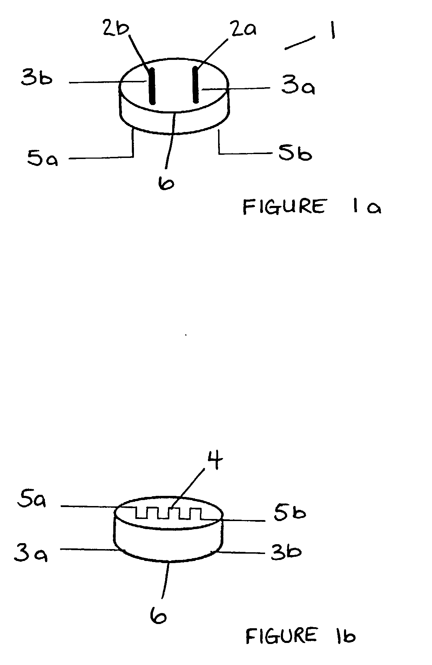

Referring to Figures 1a and 1b, there is shown a sensor comprising a monolithic tablet-shaped body 1 having deposited thereon a gas sensitive layer 6. On layer 6 is a pair of electrodes 2a and 2b which have respective electrode leads 3a and 3b, and heater 4 has heater leads 5a and 5b. The tablet-shaped body may, in the embodiment illustrated, be made from beryllium oxide.

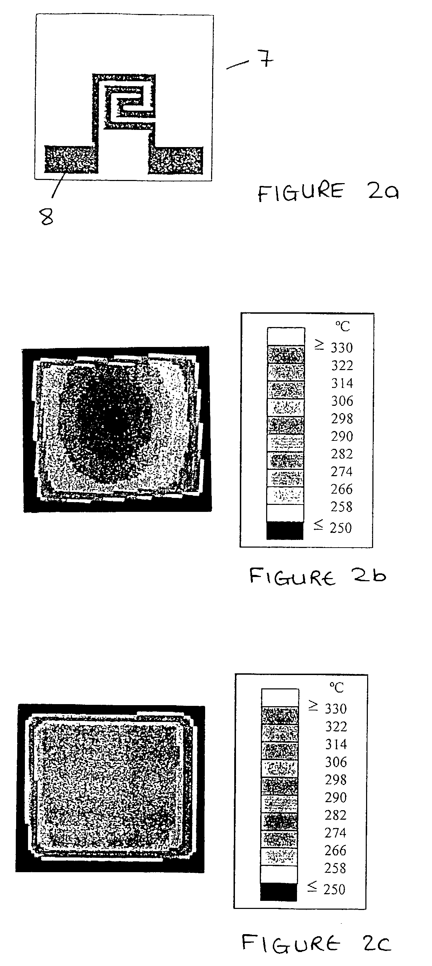

Referring to Figure 2a the sensor 7 is provided with a heater 8 having a configuration known in the art.

Figure 2b is a thermal image of a sensor known in the art which utilises the heater configuration shown in Figure 2a and a substrate of aluminium oxide. Figure 2c is a thermal image of a sensor according to the present invention, which utilises a heater configuration shown in Figure 2a and a substrate of beryllium oxide. The obverse surfaces of the two sensors, one having a substrate of aluminium oxide, the other having a substrate of beryllium oxide, are coated with graphite. Thermal images were then obtained using a Thermovision infra-red camera; the thermal images obtained are shown in Figures 2b and 2c.

It can be seen by comparison of the thermal images shown in Figures 2b and 2c that large temperature gradients appear in the aluminium oxide substrate, whereas the beryllium oxide substrate exhibits almost no temperature gradient.

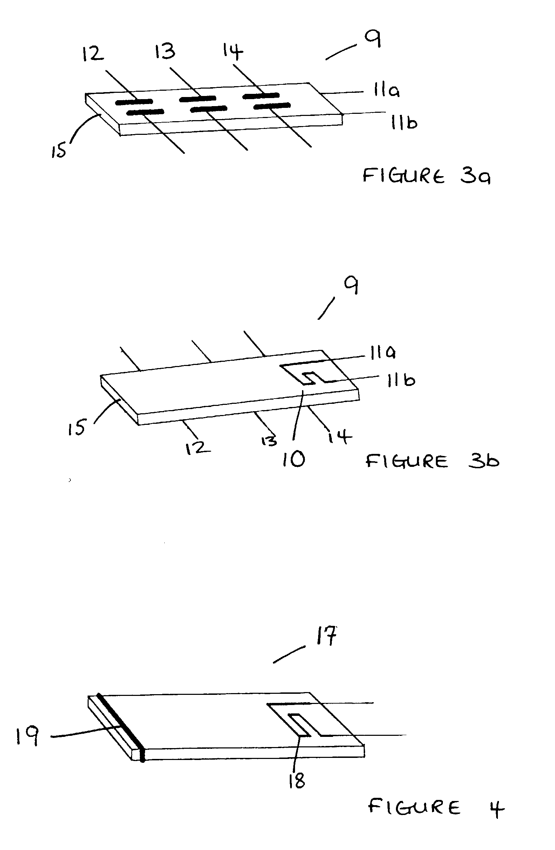

Referring to Figures 3a and 3b, sensor 9 which is in the shape of a monolithic tile 15 comprising beryllium oxide. The tile 15 has a coating of gas-sensitive material 16, and a heater array 10 connected to heater leads lla and llb, and three pairs of electrodes 12, 13 and 14. The use of beryllium oxide as a substrate and the non-uniform heater array 10 creates a temperature gradient along the length of the tile. In use active materials possessing different sensitivity and/or selectivity properties (or alternatively, the same active material possessing differing selectivity properties) are deposited along multiple areas of the sensor 9; the contact electrodes 12, 13 and 14 allow the separate detection of the change in the resistance or conductance of each active material.

Referring to Figure 4, the sensor 17 includes a heater 18 and Peltier-effect elements 19 which act as a cooling device; the addition of the cooling device further controls the desired temperature gradients obtained.

## Claims

1. A gas sensor including a substrate which is both an electrical insulator and a thermal conductor, said substrate having thereon:
(i) heating means for said substrate;
(ii) at least one gas-sensitive active material deposited on the substrate; and
(iii) a set of at least two spaced electrodes in contact with said active material.

2. A sensor according to claim 1, wherein said substrate is of a refractory or ceramic material (such as beryllium oxide or aluminium nitride).

3. A sensor according to claim 1 or 2, wherein said active material is deposited on one surface of said substrate.

4. A sensor according to any of claims 1 to 3, wherein said heating means includes at least one electrical resistance heating element, including an electrically conductive compound such as ruthenium dioxide or a noble metal such as platinum.

5. A gas sensor according to claim 4, wherein a cooling element is provided at a position distal to or spaced from the heating element so as to permit provision of a controlled temperature gradient.

6. A sensor according to any of claims 1 to 5, wherein said substrate is in the form of a substantially monolithic body.

7. A sensor according to claim 6, wherein said body is substantially disc or tablet shaped, or in the form of an elongate tile.

8. A sensor according to claim 7, wherein said heating element is at a first end of said tile, so as to permit creation of a desired thermal gradient along the length of said tile.

9. A gas sensor according to claim 8, wherein different active materials, or the same active material having different selectivity properties, are deposited along said length of said tile.

10. A gas sensor according to claim 9, which includes separate contact electrodes for each active material.
